# EUROPÄISCHE PATENTSCHRIFT

(11) **EP 0 703 373 B1**
(45) Veröffentlichungstag und Bekanntmachung des Hinweises auf die Patenterteilung: **07.06.2000**
(21) Anmeldenummer: 95112485.8
(22) Anmeldetag: 09.08.1995
(51) Int. Cl.: F16C 11/06

(54) **Kugelgelenk**
Ball-joint
Joint à rotule

(30) Priorität: 22.09.1994 DE 4433762
(43) Veröffentlichungstag der Anmeldung: 27.03.1996
(73) Patentinhaber: TRW Fahrwerksysteme GmbH & Co. KG, 40547 Düsseldorf (DE)
(72) Erfinder: SCHÜTT; Hans-Joachim, 50126 Berheim (DE); Broszat, Lothar, 40789 Monheim (DE); Heep, Theo, 47800 Krefeld (DE); Prickler, Wolfgang, 41564 Kaarst (DE)
(74) Vertreter: Stenger, Watzke & Ring Patentanwälte

(56) Entgegenhaltungen:
- DE-B- 1 299 948
- US-A- 5 011 321

## Beschreibung

Die Erfindung betrifft ein Kugelgelenk mit einem mit einer zylindrischen Aufnahmeöffnung versehenen Gehäuse und einem Kugelzapfen, der verdrehbar und begrenzt verschwenkbar in einer Lagerschale aus Kunststoff gelagert ist, die mit ihrer dem Innendurchmesser der Aufnahmeöffnung entsprechenden Mantelfläche in radialer Richtung fixiert und nach der Montage in axialer Richtung durch Ringschultern lagegesichert ist, wobei eine der Ringschultern an einem die zapfenseitige Öffnung der Lagerschale umgebenden Ringflansch ausgebildet ist.

Kugelgelenke der voranstehend beschriebenen Art sind beispielsweise aus der DE 38 43 331 C2 und DE 39 05 474 C2 bekannt. Bei der einen bekannten Ausführung ist die aus Kunststoff hergestellte Lagerschale an ihrer der Ringschulter gegenüberliegenden Seite mit einem aus der zylindrischen Aufnahmeöffnung des Gehäuses hervorstehenden Rand versehen, der zur axialen Festlegung der Lagerschale am Gehäuse umgebördelt wird. Dieser Verformungsvorgang erfordert eine Erwärmung des Kunststoffes, wobei es für die Haltbarkeit des Kugelgelenks äußerst wichtig ist, die hierfür notwendige Temperatur exakt einzuhalten. Ist die Temperatur zu gering, besteht die Gefahr, daß keine ausreichende Verformung des Bördelrandes stattfindet und damit keine ausreichende Lagesicherung erzielt wird. Ist die Temperatur zu hoch, besteht die Gefahr einer unzulässig großen Materialerweichung, beispielsweise durch örtliches Schmelzen; hierdurch können die Materialeigenschaften des fertigen Kugelgelenks nachteilig beeinflußt werden. Außerdem kann auch in diesem Fall nicht die notwendige Sicherheit für die Festlegung der Lagerschale im Gehäuse garantiert werden.

Bei der zweiten bekannten Ausführung ist eine die axiale Lagesicherung bewirkende, elastisch verformbare Ringschulter vorgesehen. Diese Ausführung besitzt den Nachteil, daß bei der Montage des Kugelgelenkes nicht nur ein hoher Kraftaufwand in Achsrichtung des Kugelzapfens aufgewendet werden muß, sondern daß sowohl das Gehäuse als auch die Lagerschale mit höchster Präzision gefertigt werden müssen, um einerseits einen zuverlässigen Sitz der Lagerschale in der zylindrischen Aufnahmeöffnung des Gehäuses zu garantieren und andererseits auszuschließen, daß die Lagerschale aufgrund von Toleranzen ein axiales Spiel im Gehäuse hat.

Aus der US-A-5 011 321 war ein Kugelgelenk der eingangs definierten Art bekannt, bei dem die Lagerschale durch ein mit ihr zu verschweißendes, deckelartiges Teil am Gehäuse festgelegt wird, wobei eine Ringschulter an einem die zapfenseitige Öffnung der Lagerschale umgebenden Ringflansch und die andere, mit der der zapfenseitigen Öffnung gegenüberliegenden Seite des Gehäuses zusammenwirkende Ringschulter am deckelartigen Teil ausgebildet ist.

Bei dieser bekannten Konstruktion weist die Lagerschale eine aus der zylindrischen Bohrung des Gehäuses herausragende, kreisförmige Fläche auf, über die der schalenförmige Deckel im Bereich seines ebenfalls kreisförmigen Bodens mit der Lagerschale verbunden wird, insbesondere durch Ultraschallschweißen. Auf diese Weise wirkt die die zylindrische Lagerschale flanschartig umgebende Ringfläche des Deckels als Anschlagfläche für das Gehäuse. Um diese großflächige Verschweißung des Deckels mit der Oberseite der Lagerschale vornehmen zu können, ist der Deckel auf seiner Innenfläche mit Vorsprüngen und Öffnungen versehen, durch die beim Verschweißen überschüssiges Material der Vorsprünge aus dem Deckel austreten kann. Als Nachteil dieser bekannten Konstruktion ist anzusehen, daß die großflächige Verschweißung mit Hilfe der Vorsprünge nicht nur eine hohe Wärmezufuhr und damit Energiezufuhr, sondern auch eine großflächige Belastung des Materials der Lagerschale bedingt.

Ausgehend von diesem Stand der Technik liegt der Erfindung die **Aufgabe** zugrunde, den Schweißvorgang zum unlösbaren Verbinden des deckelartigen Teils mit der Lagerschale auf konkrete Volumina zu beschränken, die zudem außerhalb der mit Lagerkräften belasteten Querschnitte der Lagerschale liegen, so daß negative Auswirkungen auf die Haltbarkeit der Lagerschale ausgeschlossen sind.

Die **Lösung** dieser Aufgabenstellung durch die Erfindung ist dadurch gekennzeichnet, daß die an der der zapfenseitigen Öffnung gegenüberliegenden Seite geschlossene Lagerschale aus der Oberseite des Gehäuses herausragt und daß die Lagerschale oder das mit ihr verbindbare Teil mit einer axial vorstehenden ringförmigen Verlängerung und das jeweils andere Bauteil mit einer entsprechenden Aufnahmenut ausgebildet sind, in deren Bereich die Bauteile unlösbar miteinander verbindbar sind.

Durch diese erfindungsgemäße Ausbildung erfolgt die Verbindung zwischen dem deckelartigen Teil und der Lagerschale in einem konkreten, flächenmäßig begrenzten Teilbereich, der außerhalb der mit Lagerkräften belasteten Querschnitte der Lagerschale liegt und derart definiert gestaltet werden kann, daß ein Minimum an Schweißenergie eingebracht werden muß. Trotz vorhandener Fertigungstoleranzen läßt sich somit mit der erfindungsgemäßen Konstruktion eine sichere Herstellung der stoffschlüssigen Verbindung zwischen deckelartigem Teil und Lagerschale erzielen.

Bei einer bevorzugten Ausführungsform ist das deckelartige Bauteil als Ring ausgebildet, der mit der Lagerschale vorzugsweise durch Ultraschallverschweißung verschweißt wird. Wenn gemäß einem weiteren Merkmal der Erfindung im Grund der Aufnahmenut eine kleinere Ergänzungsnut ausgebildet wird, kann gegebenenfalls überschüssiges Material bei der Durchführung der Verschweißung problemlos aufgenommen werden.

Auf der Zeichnung ist ein Ausführungsbeispiel des erfindungsgemäßen Kugelgelenkes dargestellt, und zwar zeigen:
- Fig. 1: einen Längsschnitt durch das montierte Kugelgelenk und
- Fig. 2: einen Längsschnitt durch die Einzelteile des Kugelgelenks nach Fig. 1.

Das Kugelgelenk umfaßt ein mit einer zylindrischen Aufnahmeöffnung 1a versehenes Gehäuse 1 und einen Kugelzapfen 2, der verdrehbar und begrenzt verschwenkbar in einer Lagerschale 3 aus Kunststoff gelagert ist.

Der Kugelzapfen 2 umfaßt seinerseits einen abgeflachten Kugelkopf 2a, der über einen auf einer Teillänge mit Schlüsselflächen 2c versehenen Hals 2b mit einem Gewindezapfen 2d einstückig verbunden ist.

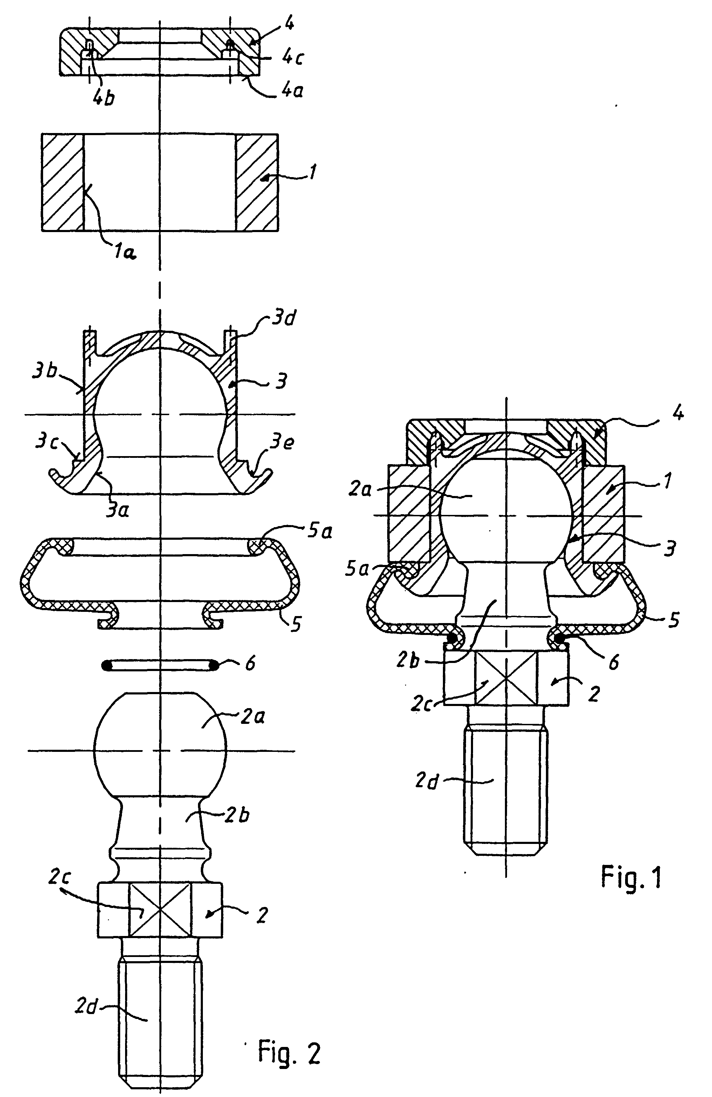

Bei der dargestellten Ausführungsform ist die aus Kunststoff hergestellte Lagerschale 3 bis auf ihre zapfenseitige Öffnung 3a geschlossen. Sie besitzt eine dem Innendurchmesser der Aufnahmeöffnung 1a des Gehäuses 1 entsprechende, zylindrische Mantelfläche 3b, die im Bereich der zapfenseitigen Öffnung 3a in eine Ringschulter 3c übergeht, mit der die Lagerschale 3 im montierten Zustand an der Unterseite des Gehäuses 1 anliegt, wie aus Fig. 1 hervorgeht. An ihrem dieser Ringschulter 3c gegenüberliegenden Ende geht die Mantelfläche 3b in eine ringförmige Verlängerung 3d über, die gemäß Fig. 1 im montierten Zustand aus der Aufnahmeöffnung 1a des Gehäuses 1 herausragt. Auf diese Verlängerung 3d wird ein Ring 4 aufgesetzt, der seinerseits eine mit der Oberseite des Gehäuses 1 zusammenwirkende Ringschulter 4a hat und weiterhin eine ringförmige Aufnahmenut 4b aufweist, die mit der Verlängerung 3d der Lagerschale 3 korrespondiert.

Im Bereich der in die Aufnahmenut 4b des Ringes 4 hineinragenden Verlängerung 3d der Lagerschale 3 werden diese beiden Teile miteinander unlösbar verschweißt, und zwar vorzugsweise durch Ultraschallschweißung. Hierdurch ergibt sich eine zuverlässige Verbindung der beiden Teile außerhalb derjenigen Querschnitte, die einerseits für die Lagerung des Kugelkopfes 2a und andererseits für eine Lagesicherung der Lagerschale 3 im Gehäuse 1 herangezogen werden. Die Fig. 1 und 2 lassen weiterhin erkennen, daß nach der Verschweißung die axiale Lagesicherung der Lagerschale 3 im Gehäuse 1 durch eine breite Ringfläche des Ringes 4 bewirkt wird, so daß sich ein zuverlässiger Halt der Lagerschale 3 im Gehäuse 1 ergibt.

Wie insbesondere aus dem oberen Teil der Fig. 2 hervorgeht, ist die Aufnahmenut 4b in ihrem Grund mit einer kleineren Ergänzungsnut 4c ausgebildet. Diese ist vorgesehen, um beim Verschweißungsvorgang ggf. anfallendes überschüssiges Material aufzunehmen, so daß trotz größerer Toleranzen und ggf. vorhandener Formfehler der Einzelteile eine zuverlässige und genaue Lagesicherung in axialer Richtung erfolgt.

Bei der dargestellten Ausführungsform ist ein Dichtungsbalg 5 vorgesehen, um die zapfenseitige Öffnung 3a der Lagerschale 3 gegen Eindringen von Schmutz zu schützen. An seiner zapfenseitigen Öffnung wird dieser Dichtungsbalg 5 mittels eines Spannringes 6 auf dem Hals 2b des Kugelzapfens 2 festgelegt. Am anderen Ende erfolgt eine Festlegung des Dichtungsbalges 5 mittels eines Wulstes 5a, der in eine Nut 3e der Lagerschale 3 eingelegt wird, bevor die Lagerschale 3 in die Aufnahmeöffnung 1a des Gehäuses 1 eingesetzt wird. Im eingesetzten Zustand (siehe Fig. 1) wird die Wulst 5a des Dichtungsbalges 5 zwischen Lagerschale 3 und Gehäuse 1 eingeklemmt.

### Bezugszeichenliste:

- 1: Gehäuse
- 1a: Aufnahmeöffnung
- 2: Kugelzapfen
- 2a: Kugelkopf
- 2b: Hals
- 2c: Schlüsselfläche
- 2d: Gewindezapfen
- 3: Lagerschale
- 3a: zapfenseitige Öffnung
- 3b: Mantelfläche
- 3c: Ringschulter
- 3d: Verlängerung
- 3e: Nut
- 4: Ring
- 4a: Ringschulter
- 4b: Aufnahmenut
- 4c: Ergänzungsnut
- 5: Dichtungsbalg
- 5a: Wulst
- 6: Spannring

## Patentansprüche

1. Kugelgelenk mit einem mit einer durchgehenden zylindrischen Aufnahmeöffnung (1a) versehenen Gehäuse (1) und einem Kugelzapfen (2), der verdrehbar und begrenzt verschwenkbar in einer Lagerschale (3) aus Kunststoff gelagert ist, die mit ihrer dem Innendurchmesser der Aufnahmeöffnung (1a) entsprechenden Mantelfläche (3b) in radialer Richtung fixiert und nach der Montage in axialer Richtung durch Ringschultern (3c, 4a) lagegesichert ist, wobei eine der Ringschultern (3c) an einem die zapfenseitige Öffnung (3a) der Lagerschale (3) umgebenden Ringflansch und die andere, mit der der zapfenseitigen Öffnung gegenüberliegenden Seite des Gehäuses (1) zusammenwirkende Ringschulter (4a) an einem mit der Lagerschale (3) verbindbaren deckelartigen Teil (4) ausgebildet ist,
**dadurch gekennzeichnet,**
daß die an der der zapfenseitigen Öffnung (3a) gegenüberliegenden Seite geschlossene Lagerschale (3) aus dem Gehäuse (1) herausragt und daß die Lagerschale (3) oder das mit ihr verbindbare Teil (4) mit einer axial vorstehenden ringförmigen Verlängerung (3d) und das jeweils andere Bauteil mit einer entsprechenden Aufnahmenut (4b) ausgebildet sind, in deren Bereich die Bauteile (3, 4) unlösbar miteinander verbindbar sind.

2. Kugelgelenk nach Anspruch 1, dadurch gekennzeichnet, daß das deckelartige Bauteil als Ring (4) ausgebildet ist.

3. Kugelgelenk nach Anspruch 1 oder 2, dadurch gekennzeichnet, daß das Bauteil bzw. der Ring (4) mit der Lagerschale (3) vorzugsweise durch Ultraschallschweißung verschweißt ist.

4. Kugelgelenk nach einem der Ansprüche 1 bis 3, dadurch gekennzeichnet, daß im Grund der Aufnahmenut (4b) eine kleinere Ergänzungsnut (4c) ausgebildet ist.

## Claims

1. Ball joint with a housing (1), which is provided with a continuous cylindrical locating opening (1a), and a ball pivot (2), which is mounted in a plastics bearing shell (3) such that it can rotate and pivot within limits, which shell is fixed in the radial direction by way of its circumferential surface (3b), which corresponds to the inside diameter of the locating opening (1a), and is secured in position following mounting in the axial direction by annular shoulders (3c, 4a), wherein one of the annular shoulders (3c) is formed at an annular flange, which surrounds the opening (3a), on the pivot side, of the bearing shell (3), and the other annular shoulder (4a), which co-operates with the side of the housing (1) lying opposite the opening on the pivot side, is formed at a cover-like part (4), which can be connected to the bearing shell (3),
characterised in that the bearing shell (3), which is closed on the side lying opposite the opening (3a) on the pivot side, projects out of the housing (1), and that the bearing shell (3) or the part (4), which can be connected to the latter, is formed with an axially protruding annular extension (3d), and the respective other component part is formed with a corresponding locating groove (4b), in the region of which the component parts (3, 4) can be permanently connected together.

2. Ball joint according to Claim 1, characterised in that the cover-like component part is formed as a ring (4).

3. Ball joint according to Claim 1 or 2, characterised in that the component part or ring (4) is welded to the bearing shell (3), preferably by means of ultrasonic welding.

4. Ball joint according to any one of Claims 1 to 3, characterised in that a smaller supplementary groove (4c) is formed in the bottom of the locating groove (4b).

## Revendications

1. Articulation sphérique avec un corps (1), muni d'une ouverture de logement (1a) traversante et cylindrique, et d'un pivot sphérique (2) qui est logé rotatif et pivotant de manière limitée dans une coquille de coussinet (3) en matière plastique qui est fixée en direction radiale avec sa surface latérale (3b) correspondant au diamètre intérieur de l'ouverture de logement (la) et qui, après le montage, est assurée en position en direction axiale par des épaulements annulaires (3c, 4a), un des épaulements annulaires (3c) étant réalisé sur une collerette annulaire qui entoure l'ouverture (3a) côté pivot de la coquille de coussinet (3) et l'autre épaulement annulaire (4a) qui coopère avec le côté opposé à l'ouverture côté pivot, du corps (1) étant réalisé sur une pièce (4) en forme de couvercle et pouvant être assemblée à la coquille de coussinet (3),
caractérisée en ce que,
la coquille de coussinet (3) fermée du côté opposé à l'ouverture (3a) côté pivot dépasse du corps (1) et en ce que la coquille de coussinet (3) ou la pièce (4) qui peut lui être assemblée est conçue avec un prolongement (3d) annulaire dépassant axialement et l'autre pièce respective est réalisée avec une rainure de logement (4b) correspondante dans la zone de laquelle les pièces (3, 4) peuvent être assemblées entre elles de manière inamovible.

2. Articulation sphérique selon la revendication 1, caractérisée en ce que la pièce en forme de couvercle est réalisée comme un anneau (4).

3. Articulation sphérique selon la revendication 1 ou 2, caractérisée en ce que la pièce ou l'anneau (4) est soudé à la coquille de coussinet (3) de préférence par un soudage par ultrasons.

4. Articulation sphérique selon l'une des revendications 1 à 3, caractérisée en ce qu'une plus petite rainure complémentaire (4c) est réalisée dans le fond de la rainure de logement (4b).
